# EUROPÄISCHE PATENTSCHRIFT

(11) **EP 2 964 457 B1**
(45) Veröffentlichungstag und Bekanntmachung des Hinweises auf die Patenterteilung: **05.05.2021**
(21) Anmeldenummer: 14713754.1
(22) Anmeldetag: 03.03.2014
(51) Int. Cl.: B32B 5/16

(54) **VERFAHREN ZUR HERSTELLUNG EINER WENIGSTENS ZWEISCHICHTIGEN PLATTE UND WENIGSTENS ZWEISCHICHTIGE PLATTE**
METHOD FOR PRODUCING AN AT LEAST TWO-LAYERED BOARD, AND AN AT LEAST TWO-LAYERED BOARD
PROCÉDÉ SERVANT À FABRIQUER UNE PLAQUE COMPRENANT AU MOINS DEUX COUCHES ET PLAQUE COMPRENANT AU MOINS DEUX COUCHES

(30) Priorität: 07.03.2013 DE 102013003947
(43) Veröffentlichungstag der Anmeldung: 13.01.2016
(73) Patentinhaber: Fraunhofer-Gesellschaft zur Förderung der angewandten Forschung e.V., 80686 München (DE)
(72) Erfinder: THOLE, Volker, 38102 Braunschweig (DE); SCHIRP, Arne, 38102 Braunschweig (DE); HENNIGER, Rainer, 89601 Schelkligen (DE)
(74) Vertreter: Schön, Thilo
(86) Internationale Anmeldenummer: PCT/EP2014/000535
(87) Internationale Veröffentlichungsnummer: WO 2014/135260

(56) Entgegenhaltungen:
- EP-A1- 1 847 385

## Beschreibung

### Technisches Gebiet der Erfindung

Die Erfindung betrifft ein Verfahren zur Herstellung einer wenigstens zweischichtigen Platte nach dem Oberbegriff des Anspruchs 1 und eine wenigstens zweischichtige Platte nach Anspruch 16.

### Technischer Hintergrund und Stand der Technik

Trägerplatten aus Holz oder Holzwerkstoffen sind im Möbel- und Bauwesen weit verbreitet. Je nach Abmessungen der Holzteile wird nach Lagenwerkstoffen, Spanwerkstoffen und Faserwerkstoffen unterschieden. Die mechanischen Eigenschaften lassen sich in weiten Bereichen gezielt durch die Variation stofflicher und verfahrenstechnischer Parameter einstellen. Dominante Einflussparameter sind die Abmessungen der Holzteile, die Rohdichte des Werkstoffs, die Bindestoffanteile sowie die Struktur des Werkstoffs senkrecht zur Plattenebene und in der Plattenebene. So kann bei leichten Dämmplatten lediglich eine Biegefestigkeit von 1 N/mm² vorliegen, aus dergleichen Holzart sind mit lamellierten Holzteilen als Strukturelemente aber auch Werkstoffe mit einer Biegefestigkeit von deutlich mehr als 100 N/mm² herstellbar. Neben den mechanischen Eigenschaften sind es vor allem die hygrischen Eigenschaften, die das Anwendungspotenzial bestimmen. Werkstoffe mit hydrolytisch wenig stabilen Bindestoffen sind für eine Außenanwendung und bei Konstruktionselementen, bei denen die Gefahr einer starken Auffeuchtung besteht, nicht geeignet. Für lastabtragende Einsatzbereiche bestehen strenge normative Regelungen hinsichtlich der Feuchtebeständigkeit der Werkstoffe. Die Holzkomponente lässt sich aber auch durch den Einsatz feuchtebeständiger Bindestoffe nicht gegen das hygrisch bedingte Quellen und Schwinden schützen. Die mit den hygrischen Längenänderungen verbundenen Spannungen können größer sein, als die maximalen Haftspannungen zwischen der Bindestoffkomponente und der Holzkomponente. Folge dieser Zusammenhänge sind die häufig zu beobachtenden Delaminierungen bei Holzwerkstoffen, die im Außenbereich z. B. als Bekleidung eingesetzt werden. Um diese unerwünschten Witterungswirkungen zu vermeiden werden die Werkstoffe beschichtet. Üblich ist der Auftrag von Lack. Ein Lackauftrag ist allerdings nur temporär wirksam. Unvermeidbare hygrische Längenänderungen führen bei der sehr geringen Lackschichtdicke zu feinen Rissen, durch die flüssiges Wasser in den Werkstoff eindringen kann. Größflächige Lackenthaftungen und zunehmende Witterungsschäden der Holzwerkstoffplatten sind die Folge.

Dauerbeständigere Beschichtungen aus Melamin- oder Phenolpapieren sind zwar möglich, werden aber, da hierdurch die Holzstruktur überdeckt wird, nur selten angewendet. Ferner sind diese Beschichtungen sehr spröde. Mechanische Belastungen führen daher ebenfalls leicht zu Rissen mit den auch bei Lackbeschichtungen bekannten Folgen. Besonders häufig sind Rissbildungen im Bereich von Befestigungselementen anzutreffen. Bei Schrauben- oder Nagelköpfen sowie bei Muttern bilden sich, auf Grund lokaler Überbeanspruchungen, zunächst unsichtbare, bei Wasserzutritt aber deutlich sichtbare sternförmige Risse aus. Dies stellt neben einem ästhetischen Mangel auf längere Sicht auch einen technischen Mangel dar.

Einige Holzwerkstoffe wie z. B. Oriented Strand Board (OSB) bestehen aus größeren lamellierten Holzteilen als Funktions-Struktur-Elementen (FSE). Auf Grund des sperrholzartigen Aufbaus senkrecht zur Plattenebene und der hohen mechanischen Eigenschaften sind diese Werkstoffe ein bevorzugter Baustoff. Werkstoffe für bauliche Anwendungen müssen die normativen Anforderungen erfüllen. So sind die Anforderungen an OSB durch Normen geregelt, wobei in der EN 300 vier Werkstoffklassen definiert sind. Mit steigender Nummerierung OSB 1 bis OSB 4 steigen die Anforderungen insbesondere an die Feuchtebeständigkeit. Nachgefragt und industriell hergestellt werden vor allem die OSB 3. OSB 1 ist ohne Bedeutung, auf die OSB 2 und OSB 4 entfallen zusammen lediglich 20 % bis 30 % der Produktionsmenge.

Bei allen Holzwerkstoffen ist die Rohdichte einer der entscheidenden Einflussfaktoren im Hinblick auf die hygrischen und mechanischen Eigenschaften. Mit zunehmender Dichte steigen die elastischen Kennwerte (E-Modul) und die mechanischen Eigenschaften (Biegefestigkeit, Zugfestigkeit). Auch die Klebstoffmenge und der Klebstofftyp spiegeln sich in den mechanischen Eigenschaften wieder. Eine unzureichende Verklebung zeigt sich trotz einer entsprechend hohen Rohdichte in geringen Querzugfestigkeiten. Die erforderlichen Klebstoffanteile liegen bei OSB trotz der wesentlich geringeren Partikeloberfläche in der gleichen Größenordnung wie bei klassischen Spanplatten. Eine Vielzahl von Untersuchungen belegt ferner die starke Abhängigkeit der Biegefestigkeit und des Biege-E-Moduls von der Strandlänge, wobei weniger die Strandlänge zum Tragen kommt, als vielmehr das Verhältnis der Strandlänge zur Stranddicke (Längenschlankheitsgrad). Bis zu Längenschlankheitsgraden von 200 lassen sich deutliche Festigkeitssteigerungen erzielen. Daher steht bei der Herstellung von OSB auch nicht die Stranddicke sondern der Längenschlankheitsgrad im Vordergrund. Häufig finden sich in den Werkstoffen auch Strands mit einer Dicke von deutlich mehr als 0,5 mm. Dickere Strands lassen sich auch beim Heißpressen nicht ausreichend plastifizieren, so dass kein mit dem Sperrholz vergleichbarer, flächiger Kontakt der einzelnen Strands oder Furnierstreifen vorliegt. Auch der Klebstoffauftrag auf den Strands ist nicht flächig sondern punktförmig. Werden diese Werkstoffe einer direkten Bewitterung ausgesetzt, kommt es innerhalb einer für Baustoffe relativ kurzen Zeitspanne zu deutlich sichtbaren Delaminierungen in der Deckschicht. Strands können sich kraftfrei von der Plattenoberfläche lösen oder lassen sich mit geringer Schälbeanspruchung abziehen. Delaminierungen können bei unzureichender Klebstoffmenge auch ohne Bewitterung auftreten. Da die Klebstoffverteilung statistischen Gesetzmäßigkeiten folgt, werden, um derartige Delaminierungen weitgehend zu vermeiden, relativ hohe Klebstoffmengen benötigt.

Eine Ursache für den vergleichsweise hohen Klebstoffbedarf liegt ferner an der Porenstruktur, die sich zwangsläufig bei dickeren und daher nicht ausreichend plastifizierten Strands bzw. Furnierstreifen, ergibt. Bei einer Zugbeanspruchung und ungünstiger Porenstruktur werden die Klebfugen auf Abschälen beansprucht - ein für eine Klebung sehr ungünstiger Beanspruchungsfall.

Porenraum und Plattenrohdichte zeigen bis zu einer Rohdichte von ca. 10 % über der Rohdichte des Holzes einen annähernd linearen Zusammenhang. Oberhalb dieses Bereichs nimmt der zwischenpartikuläre Porenraum nicht in dem Maße ab wie die Plattenrohdichte zunimmt. Ein Effekt, der unter anderem durch die Strandgeometrie, Stranddicke, Holzart, Plastifizierung beim Heißpressen und Strandfeuchte vor dem Heißpressen beeinflusst wird. Aus wirtschaftlichen und technischen Gründen (zweckmäßige Plattenrohdichte, Stranddickenschwankungen) wird unter industriellen Bedingungen immer ein gewisser Porenraum in den Holzwerkstoffen aus Strands und Furnierstreifen verbleiben.

Für spezielle Anwendungen sind auch bei der Herstellung von Möbeln Werkstoffe mit einem hohen E-Modul gefragt. Werkstoffe mit Strands und Furnierstreifen wären z. B. ein sehr geeigneter Möbelwerkstoff. Möbelwerkstoffe erfordern aus optischen und aus anwendungstechnischen Gründen eine Beschichtung. Am weitesten verbreitet sind Melaminpapiere, Folien und Laminate, die mit oder ohne Klebstoffauftrag durch einen Pressvorgang appliziert werden. Eine Applikation dieser Beschichtungsstoffe auf den Werkstoffoberflächen ist zwar möglich, jedoch zeichnen sich die auch in der Oberfläche vorhandenen Poren durch die Beschichtung hindurch ab bzw. die Beschichtung wird in die Poren hineingedrückt. Bisherige Ansätze, dieses Problem durch Applikation mehrlagiger Beschichtungen, durch Spachteln oder Laminate zu lösen, waren zwar technisch erfolgreich, sind aber nicht wirtschaftlich. Es besteht also Bedarf nach einem beschichtungsfähigen Möbelwerkstoff mit hohem E-Modul.

Auch als Konstruktionswerkstoff in stark feuchtebelasteten Bereichen wären die Strand- und Furnierstreifenwerkstoffe gut geeignet, wenn sich die Delaminierungen vermeiden ließen. Ein Schutz gegen Delaminierungen ließe sich durch Beschichtungen erreichen. So können Pressbeschichtungen wie Melamin- und Phenolpapiere das Eindringen von Wasser effektiv verhindern. Der oberflächennahe Porenraum wird durch diese Beschichtungen aber nicht ausgefüllt, sondern lediglich flächig überdeckt. Diese Bereiche stellen gegen mechanische Beschädigungen eine Schwachstelle dar, so dass lediglich die sehr teuren mehrlagigen Pressbeschichtungen oder Laminate einen dauerhaften Schutz gewährleisten. Von wenigen Anwendungsbereichen abgesehen, so für Betonschalungsplatten, konnten sich Pressbeschichtungen auf Strand- oder Furnierstreifenwerkstoffen nicht durchsetzen.

Neben den weniger günstigen Pressbeschichtungen (Melaminpapiere, Folien) wären auch Lacke als Beschichtung denkbar. Da auch für Lackbeschichtungen tiefe Oberflächenporen ungünstig sind und sich ferner eine deckende Beschichtung mit den üblichen Auftragsmengen auf Grund der Porenstruktur nicht realisieren lässt, ist auch bei einer Lackbeschichtung ein kapillarer und sorptiver Wasserzutritt nicht zu vermeiden.

Sowohl für Möbelanwendungen als auch für bauliche Anwendungen besteht daher für Holzwerkstoffe aus Strands und Furnierstreifen ein Bedarf an effektiven Beschichtungsstoffen, die porenfüllend, wasserabweisend, dauerhaft und wenig rissanfällig sind.

Es sind weiterhin sogenannte Holz-Polymer-Komposite (Wood Polymer Composites: WPC) bekannt. Solche WPCs auf der Basis von Polyolefinen und anderen thermoplastisch verarbeitbaren Kunststoffen werden in zunehmendem Maße im deutschen wie im europäischen Markt etabliert. Ihr Einsatz erfolgt größtenteils im Außenbereich. Übliche Anwendungen sind Terrassenbeläge und Fassadenverkleidungen. Eine Erweiterung ihres Anwendungspotenzials wird angestrebt, ist aber derzeit durch eine Reihe von Eigenschaften stark eingeschränkt. Dazu gehört ihre geringe Oberflächenenergie, die eine Verklebung oder Beschichtung deutlich erschwert. Bauteile aus WPC sind beispielsweise in der DE 10 2006 027 982 B3 und der DE 20 2009 448 U1 beschrieben, wobei die DE 20 2009 448 U1 ein Extrusionsverfahren und die DE 10 2006 027 982 B3 ein Spritzgussverfahren zur Herstellung der jeweiligen Bauteile beschreibt.

In der gattungsbildenden EP 1 847 385 A1 wird eine Mehrschichtplatte bestehend aus einem Kern und auf der Ober- und der Unterseite des Kerns angeordneten Deckschichten vorgeschlagen. Insbesondere wird vorgeschlagen, dass die Deckschichten aus WPC bestehen und der Kern eine OSB-Platte ist. Es wird ein Verfahren angegeben, wie eine solche Mehrschichtplatte hergestellt werden kann: Es wird zunächst eine Schicht aus WPC-Granulat aufgestreut, auf welche eine Schicht aus OSB-Strands aufgestreut wird. Auf diese Schicht wiederum wird eine Schicht aus WPC-Granulat aufgestreut. Die drei Schichten werden dann gemeinsam unter Wärme- und Druckeinwirkung verpresst.

Es hat sich jedoch herausgestellt, dass dieses Verfahren in der Praxis nicht umsetzbar ist, weil das auf die obere Deckschicht gestreute Granulat in das lockere Vlies einrieselt und somit nicht auf den Strands fixiert wird, keine vollständige Deckung verursacht und zu einem unsymmetrischen Plattenaufbau führt. Ein unsymmetrischer Plattenaufbau verursacht ein Verwerfen der Platten, wodurch sie unbrauchbar werden.

### Darstellung der Erfindung

Hiervon ausgehend stellt sich die vorliegende Erfindung die Aufgabe, ein gut funktionierendes Verfahren zur Verfügung zu stellen, mit dem eine wenigstens zweischichtige Platte mit einer zumindest teilweise aus Holzteilen, Holzpartikeln oder Holzfasern bestehenden Tragschicht und einer aus einem WPC-Material bestehenden Deckschicht hergestellt werden kann.

Diese Aufgabe wird durch ein Verfahren mit den Merkmalen des Anspruchs 1 sowie durch die mindestens zweischichtige Platte nach Anspruch 16 gelöst Bevorzugte Ausführungsformen sind durch die abhängigen Ansprüche definiert. Beim erfindungsgemäßen Verfahren wird zunächst eine fertige Tragplatte (Holzwerkstoffplatte wie OSB, LSL, oder Mehrlagenmassivholz) hergestellt, welche die Tragschicht bildet. Diese fertige Platte wird mit einem WPC-Beschichtungsstoff, insbesondere einem WPC-Granulat, unter Wärme- und Druckeinwirkung verpresst, so dass dieser während des Verpressens zum einen zur Deckschicht geformt und zum anderen mit der Tragplatte stoffschlüssig verbunden wird. Es hat sich herausgestellt, dass trotz der oben beschriebenen Eigenschaften von WPC eine ausreichende stoffschlüssige Verbindung mit der Tragplatte ausgebildet werden kann, insbesondere wenn die Tragplatte porenbehaftet ist. Die Verwendung alternativer Plattentypen (z. B. Spanplatte, Massivholzplatte) zur WPC-Pressbeschichtung ist ebenfalls möglich. Diese alternativen Platten können auch eine relativ geringe Rohdichte (kleiner als 500 kg/m³) haben. Vorteilhaft kann zur Haftverbesserung der Beschichtung auf der Tragplatte die Verwendung von Haftvermittlern sein, die aus bei der WPC-Herstellung üblicherweise eingesetzten Haftvermittlern oder aus den zur Herstellung der Tragplatten verwendeten Klebstoffen bestehen können. Da bei besonders leichten Platten auch die Gefahr des Einrieselns der Granulate besteht, hat es sich als vorteilhaft erwiesen, wenn zwischen Granulat und Tragplatte eine thermoplastische Folie gelegt wird, die durch den Wärmeeintrag beim Heißpressen aufschmilzt und mit der Tragplatte und dem Granulat einen festen Verbund eingeht. Die Verwendung thermoplastischer Folien ist auch eine Möglichkeit, das Durchrieseln beim Eingangverfahren zu vermeiden. Der Vorteil einer porenfüllenden Beschichtung aus WPC eröffnet darüber hinaus noch die Möglichkeit duroplastische Pressbeschichtungsstoffe oder Furniere zu applizieren. Dies kann entweder zusammen mit der WPC-Beschichtung oder in einem weiteren Pressprozess nach der Applikation der WPC-Beschichtung erfolgen.

Die Erfindung wird nun anhand von Ausführungsbeispielen mit Bezug auf die Figuren näher erläutert. Hierbei zeigen:

### Kurzbeschreibung der Figuren

- Figur 1: eine schematische Darstellung einer Vorrichtung zur Herstellung einer erfindungsgemäßen zweischichtigen Platte in einer stark schematischen Darstellung,
- Figuren 2 bis 10: die Herstellung einer zweischichtigen Platte mittels der in Figur 1 gezeigten Vorrichtung,

- Figur 11: eine Vorrichtung zur Herstellung einer erfindungsgemäßen dreischichtigen Platte in einer der Figur 1 entsprechenden, stark schematisierten Darstellung, und
- Figuren 12 bis 21: die Herstellungsschritte zur Herstellung einer erfindungsgemäßen dreischichtigen Platte unter Verwendung der in Figur 11 gezeigten Vorrichtung.

### Darstellung bevorzugter Ausführunqsbeispiele

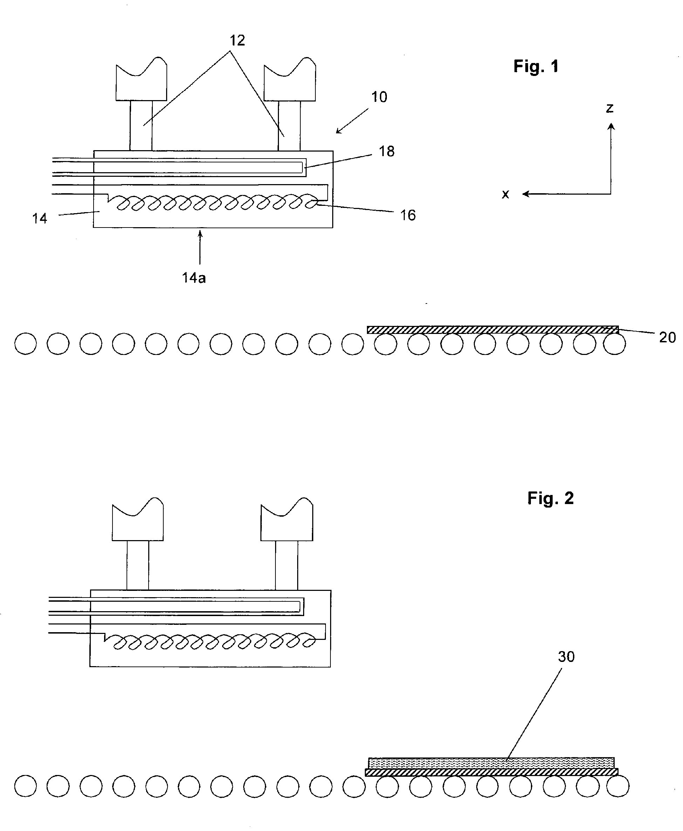

Die Figur 1 zeigt stark schematisiert eine Vorrichtung zur Herstellung einer erfindungsgemäßen zweischichtigen Platte. Diese Vorrichtung besteht im Wesentlichen aus zwei Teilen, nämlich aus einer Presse 10, deren Presselement 14 mittels Kolben-Zylinder-Einheiten 12 in Z-Richtung bewegbar ist, und einer vorzugsweise rechteckigen Pressplatte 20, welcher relativ zur Presse in einer horizontalen Richtung, nämlich der X-Richtung, bewegbar ist.

Das erste Presselement 14 hat eine nach unten weisende, in der Regel ebene Beaufschlagungsfläche 14a, welche in der Regel im Wesentlichen die Größe der Pressplatte hat oder etwas kleiner als diese ist. Das Presselement 14 weist eine (vorzugsweise elektrische) Heizung 16 und eine Kühlung 18, welche vorzugsweise als Wasserkühlung ausgeführt ist, auf. Dies ist, wie die Zeichnung insgesamt, in Figur 1 nur schematisch dargestellt.

In einem ersten Verfahrensschritt, wie er in Figur 2 dargestellt ist, wird eine Tragplatte 30, welche insbesondere eine Holzwerkstoffplatte, eine Mehrschicht-Massivholzplatte oder eine Massivholzplatte sein kann, auf die Pressplatte 20 aufgelegt. Sofern eine Holzwerkstoffplatte als Tragplatte 20 verwendet wird, so ist eine sogenannte OSB-Platte besonders bevorzugt.

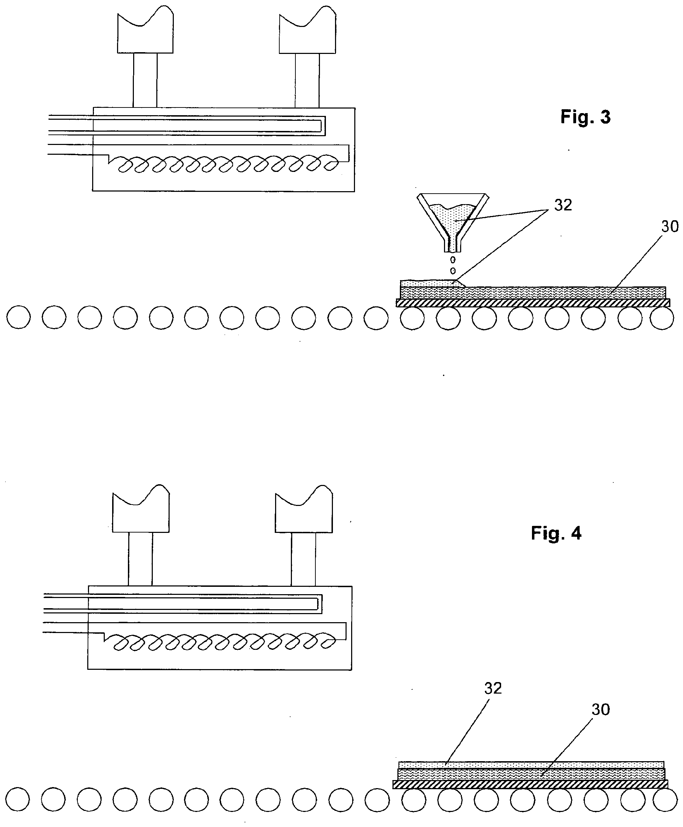

Im nächsten Verfahrensschritt, wie er in Figur 3 gezeigt wird, wird auf die nach oben weisende Oberfläche der Tragplatte 30 ein WPC-Beschichtungsstoff aufgebracht. Im gezeigten Ausführungsbeispiel liegt dieser WPC-Beschichtungsstoff als WPC-Granulat 32 vor, welches auf die nach oben weisende Oberfläche der Tragplatte 30 aufgestreut oder aufgeschüttet wird. Das Auftragen erfolgt vorzugsweise so, dass eine möglichst gleichmäßig dicke Schicht von WPC-Granulat 32 die gesamte nach oben weisende Oberfläche der Tragplatte 30 bedeckt (Figur 4).

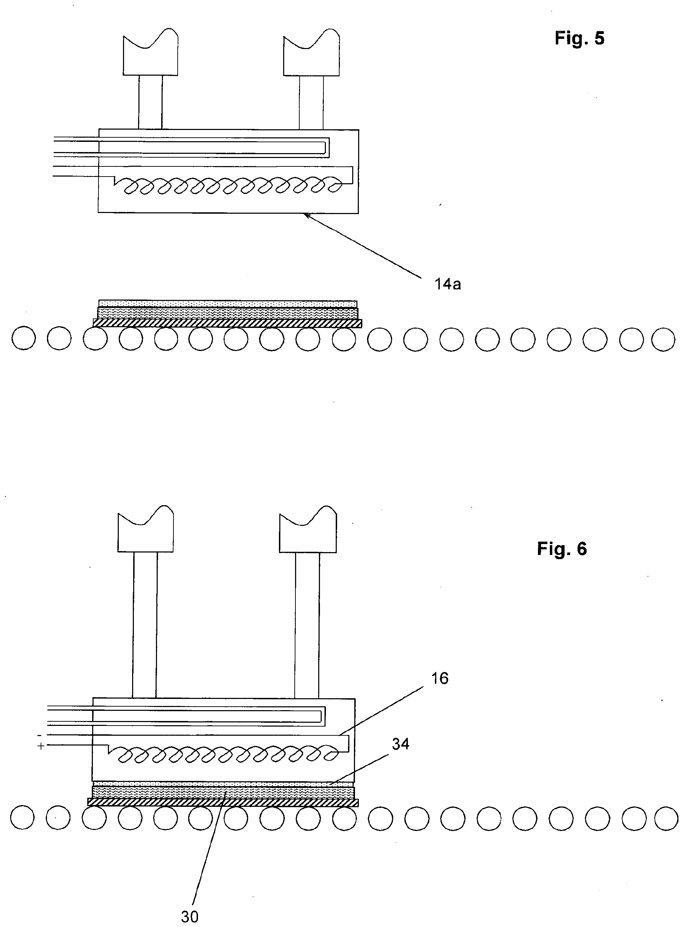

Im nachfolgenden, in Figur 5 gezeigten Verfahrensschritt, wird die Pressplatte 20 unter das erste Presselement 14 bewegt; hiernach wird im nächsten Verfahrensschritt das Presselement 14 mittels der Kolben-Zylinder-Einheiten 12 abgesenkt, so dass das WPC-Granulat 32 mit der Tragplatte verpresst wird, so dass eine in sich feste, stoffschlüssig mit der Tragplatte 30 verbundene WPC-Schicht 34 entsteht. Dieses Verpressen geschieht unter Wärmeeinwirkung, wozu die oben beschriebene Heizung 16 dient. Diese Heizung 16 kann bereits vor Absenken des Presselementes 14 oder erst während des Pressens angeschaltet werden. Hierbei wird die Beaufschlagungsfläche 14a vorzugsweise auf eine Temperatur zwischen 80°C und 180°C aufgeheizt. Der Pressdruck beträgt vorzugsweise zwischen 0,5 N/mm² und 3,5 N/mm², die geschlossene Pressdauer ist abhängig von der Beschichtungsstoffdicke und beträgt vorzugsweise zwischen 5 s und 43 s pro mm Schichtstoffdicke.

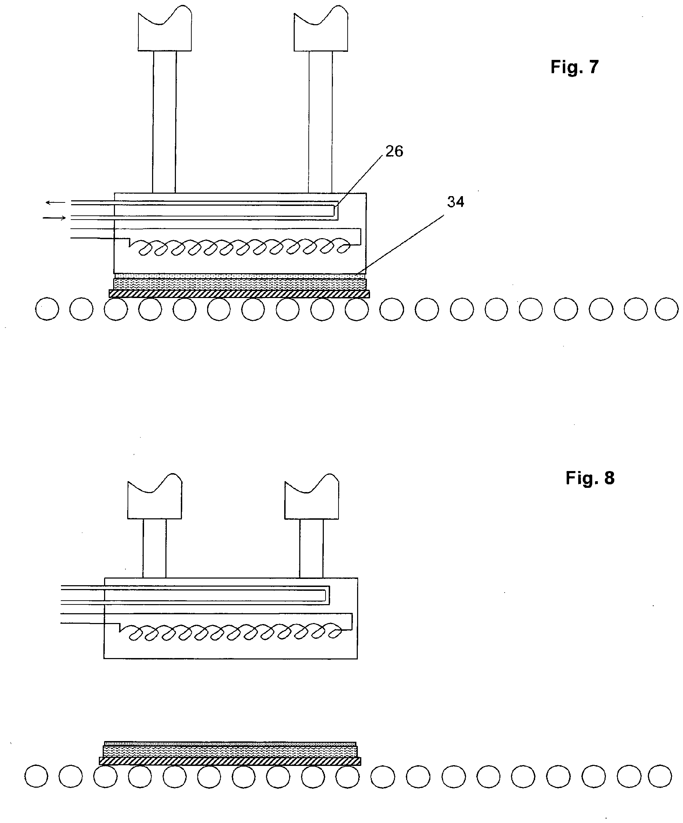

Gegen Ende des Pressvorgangs ist es zu bevorzugen, die Beaufschlagungsfläche 14a und somit die eben gebildete zweischichtige Platte 36 und hierbei insbesondere die WPC-Schicht 34 zu kühlen, wozu die oben erwähnte Kühlung 26 dient (Figur 7). Hierbei ist es zu bevorzugen, dass zumindest die WPC-Schicht 34 bis auf eine Temperatur von vorzugsweise weniger als 50°C abgekühlt wird.

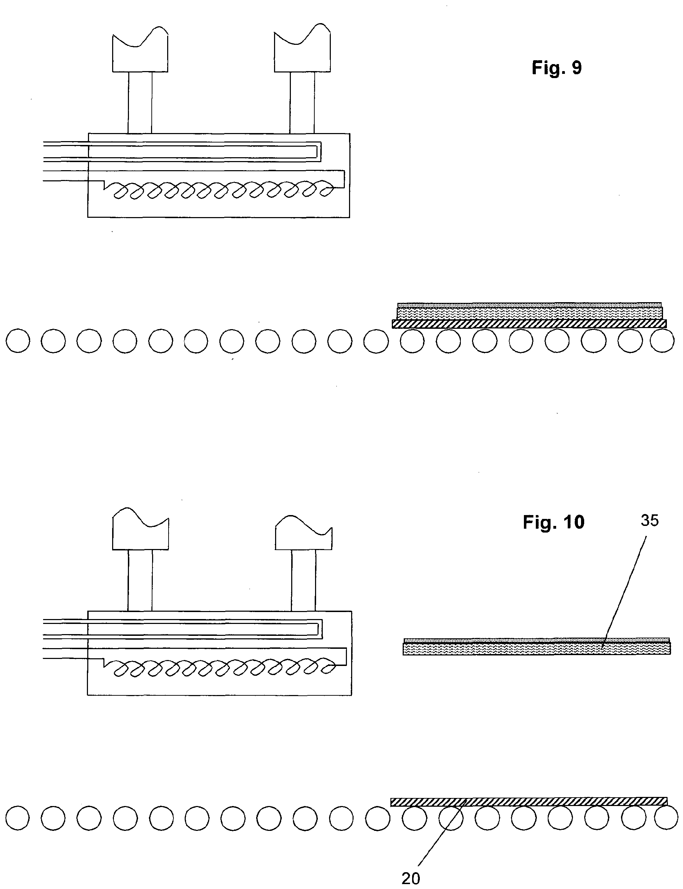

Das erste Presselement 14 wird nun angehoben, die Pressplatte 20 aus der Presse 10 herausgefahren und die fertige zweischichtige Platte 35 von der Pressplatte 20 abgehoben (Figuren 8 bis 10). Die Pressplatte 20 steht dann für einen neuen Produktionszyklus zur Verfügung.

Insbesondere folgende Varianten zum eben beschriebenen Ausführungsbeispiel sind möglich, zeichnerisch jedoch nicht dargestellt:
Vor Aufbringen des WPC-Beschichtungsstoffes (WPC-Granulat 32) kann auf die nach oben weisende Oberfläche der Tragplatte ein Haftvermittler aufgebracht werden. Dieser Haftvermittler kann ein Haftvermittler sein, wie er aus der WPC-Herstellung grundsätzlich bekannt ist und/oder es kann ein Klebstoff sein, wie er beispielsweise bei der Tragplattenherstellung verwendet wird.

Alternativ oder zusätzlich ist es möglich, zwischen Granulat und Tragplatte eine thermoplastische Folie einzulegen, die durch den Wärmeeintrag beim Heißpressen aufschmilzt und mit der Tragplatte und dem Granulat einen festen Verbund eingeht.

Weiterhin ist es möglich, eine weitere (äußere) Schicht aus einer duroplastischen Beschichtung, insbesondere aus einem Melaminpapier, einem Phenolpapier oder dergleichen, auf der WPC-Schicht 34 vorzusehen. Diese duroplastische Beschichtung kann grundsätzlich nach Fertigstellung der zweischichtigen Platte 35 aufgebracht werden, es ist jedoch auch möglich, diese im beschriebenen Pressvorgang mit zu applizieren; in diesem Fall würde zwischen dem in Figur 4 gezeigten und dem in Figur 5 gezeigten Verfahrensschritt ein entsprechendes Papier oder eine entsprechende Folie auf die Schicht aus dem WPC-Granulat 32 aufgelegt werden.

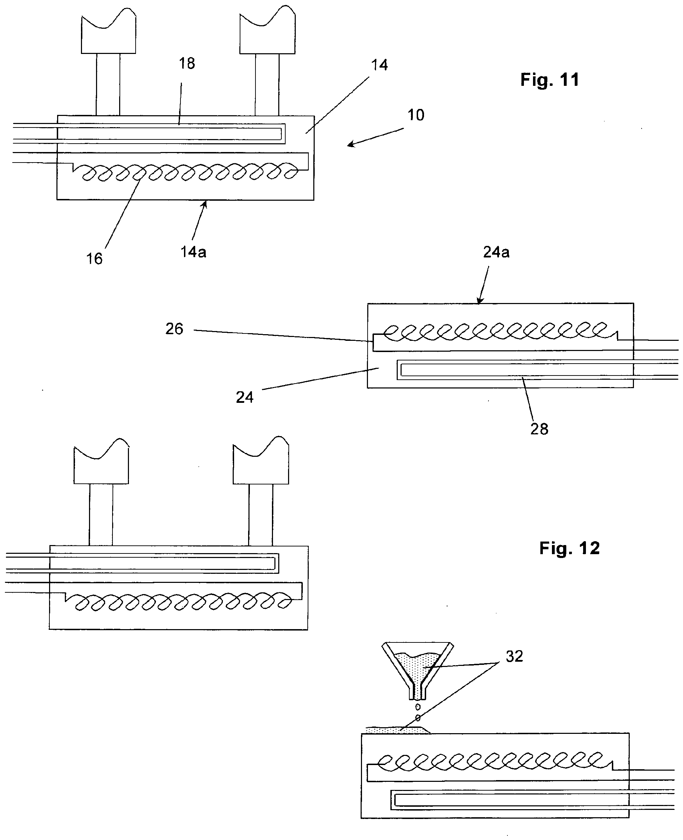

In einem ähnlichen Verfahren ist auch die Herstellung einer dreischichtigen Platte möglich, bei welcher die beiden äußeren Schichten aus WPC-Material bestehen und die mittlere Schicht die Tragplatte ist. Ein solches Verfahren ist in den Figuren 11 bis 21 gezeigt, Es wird hier ein zweites Presseelement 24 bereitgestellt, welches im Wesentlichen genauso aufgebaut sein kann wie das oben beschriebene Presselement 14 (welches in diesem Fall das erste Presselement 14 bildet). Dieses zweite Presselement 24 ersetzt die Pressplatte des ersten Ausführungsbeispiels.

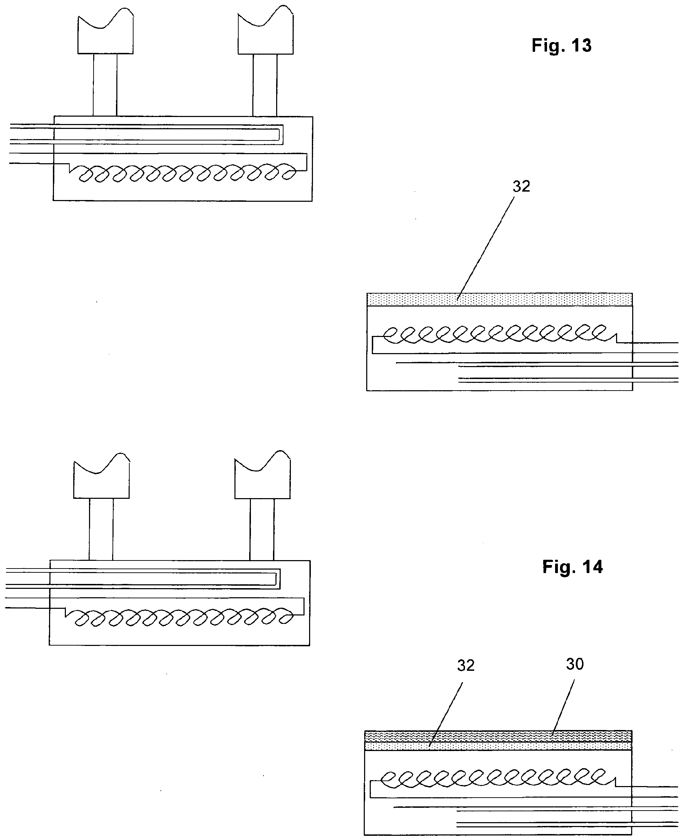

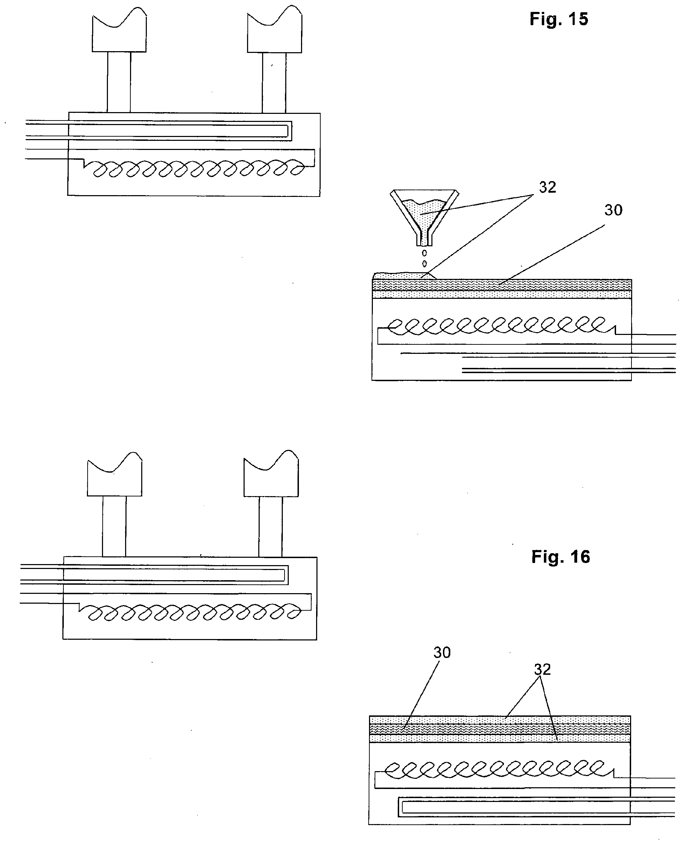

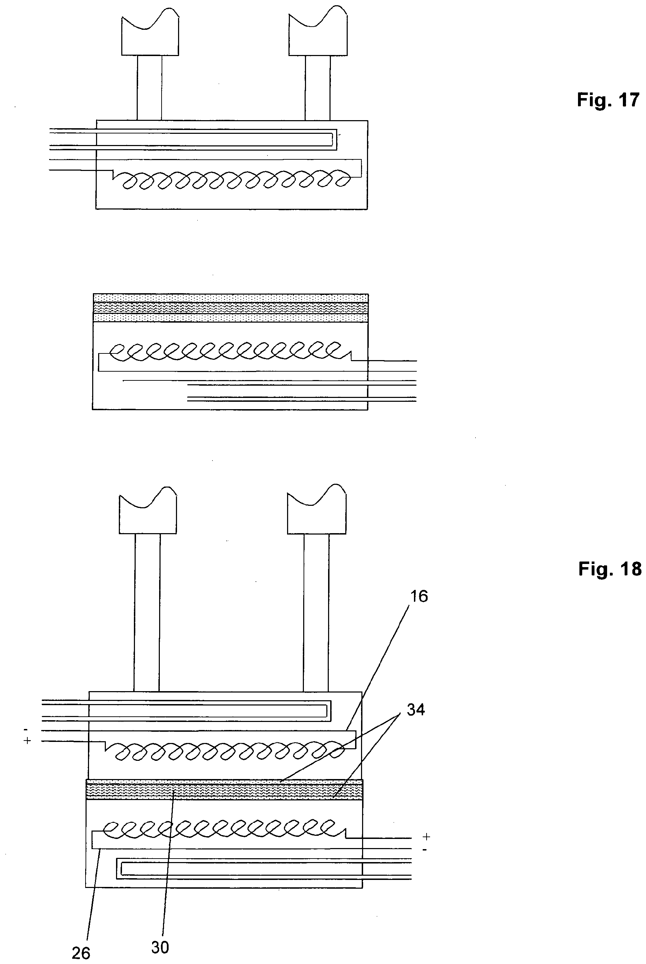

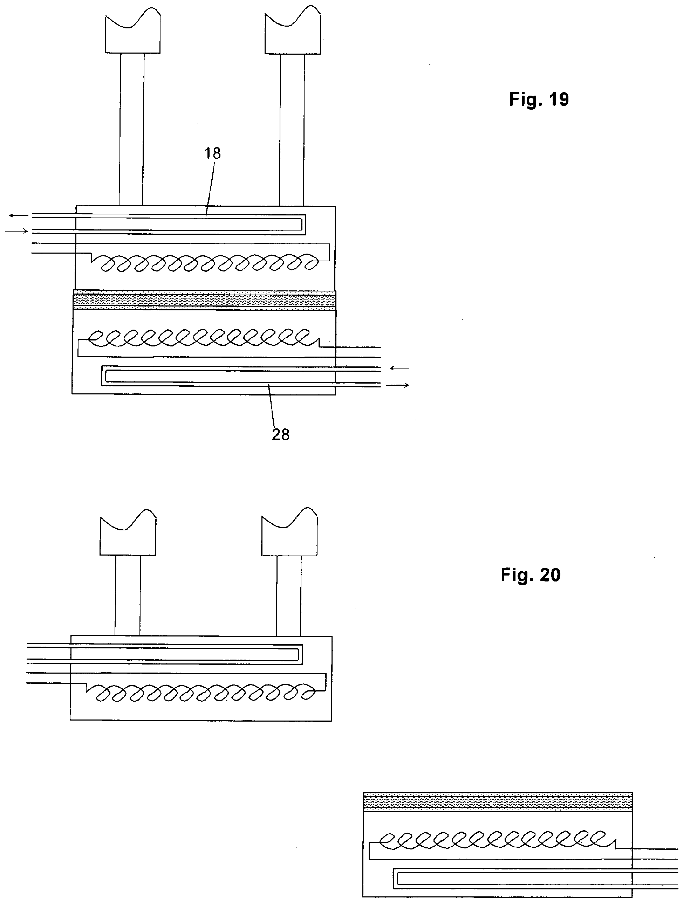

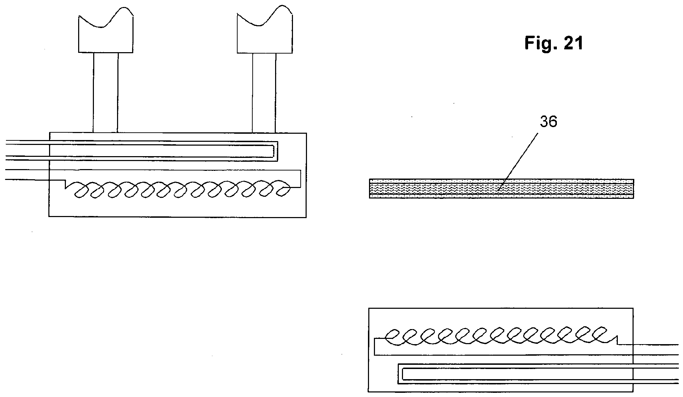

Zunächst wird auf die Beaufschlagungsfläche 24a des zweiten Presseelements 24 WPC-Material (im gezeigten Ausführungsbeispiel in Form von WPC-Granulat 32) aufgebracht (Figuren 12 und 13). Auf die Schicht aus WPC-Material wird nun eine Tragplatte 30 aufgelegt (Figur 14) und anschließend wird eine weitere Schicht aus WPC-Material, insbesondere aus WPC-Granulat 32, aufgetragen (Figur 15). Die drei Schichten werden nun miteinander verpresst (Figuren 17 bis 19), wobei eine Heizung und Kühlung von beiden Seiten erfolgen kann. Nach Auseinanderfahren der Presselemente 14, 24 (Figur 20) kann nun die dreischichtige Platte 36 entnommen werden (Figur 21).

Die oben angegebenen Varianten bezüglich des Aufbringens eines Haftvermittlers und/oder einer thermoplastischen Folie zwischen Tragplatte und WPC-Beschichtungen, können auch hier entsprechend angewendet werden. Ebenso ist, wie dies oben bereits beschrieben wurde, eine zusätzliche Beschichtung der WPC-Beschichtung mit einer duroplastischen Beschichtung möglich.

In einem weiteren Ausführungsbeispiel des Verfahrens wird der WPC-Beschichtungsstoff nicht in Form eines Granulates bereitgestellt, sondern in Form einer in einem vorhergehenden Pressvorgang hergestellten Platte oder Folie, welche mit der Tragplatte verpresst wird. Hier wäre es insbesondere auch möglich, eine Rollenpresse zu verwenden, so dass das Verpressen in einem quasikontinuierlichen Prozess erfolgt.

### Bezugszeichenliste

- 10: Presse
- 12: Kolben-Zylinder-Einheit
- 14: Presselement, erstes Presselement
- 14a: Beaufschlagungsfläche
- 16: Heizung
- 18: Kühlung
- 20: Pressplatte
- 24: zweites Presselement
- 24a: Beaufschlagungsfläche
- 26: Heizung
- 28: Kühlung
- 30: Tragplatte
- 32: WPC-Granulat
- 34,34': WPC-Schicht
- 35: zweischichtige Platte
- 36: dreischichtige Platte

## Patentansprüche

1. Verfahren zur Herstellung einer wenigstens zweischichtigen Platte (35, 36), wobei die Platte eine Tragschicht, welche zumindest teilweise aus Holz oder lignocellulosehaltigen Partikeln oder Fasern besteht, und wenigstens eine aus einem Holz-Polymer-Komposit Material (Wood Polymer Composites oder WPC-Material bestehende Beschichtung, welche auf wenigstens einer Seite der Tragschicht angeordnet ist, aufweist **gekennzeichnet durch** folgende Schritte:
- Bereitstellen einer fertigen, die Tragschicht bildenden Tragplatte (30),
- Bereitstellen von WPC-Beschichtungsstoff auf wenigstens einer der beiden Oberflächen der Tragplatte (30),
- Verpressen von WPC-Beschichtungsstoff und Tragplatte (30) unter Wärmeeinwirkung und Druck.

2. Verfahren nach Anspruch 1, **dadurch gekennzeichnet, dass** der WPC-Beschichtungsstoff im Wesentlichen aus einem Gemisch eines thermoplastischen Polymers mit lignocellulosehaltigen Partikeln besteht.

3. Verfahren nach Anspruch 1 und 2, **dadurch gekennzeichnet, dass** es sich bei den lignocellulosehaltigen Partikeln um Späne und oder Faserstoffe handelt.

4. Verfahren nach Anspruch 2 und 3, **dadurch gekennzeichnet, dass** ein massebezogenes Mischungsverhältnis x (x = mₘ/m_{P}) zwischen dem thermoplastischen Polymer mₘ und den lignocellulosehaltigen Partikeln mₚ von x = 0,1 bis 4 vorzugsweise 0,5 bis 2 gewählt wird.

5. Verfahren nach Anspruch 1, **dadurch gekennzeichnet, dass** der WPC-Beschichtungsstoff ein WPC-Granulat (32) oder -Pulver ist, welches auf die nach oben weisende Oberfläche der Tragplatte (30) aufgestreut wird.

6. Verfahren nach einem der vorangehenden Ansprüche, **dadurch gekennzeichnet, dass** die Tragplatte (30) eine Holzwerkstoffplatte, z. B. OSB-Platte, oder eine Massivholzplatte ist, welche vorzugsweise eine Rohdichte von weniger als 500 kg/m³ hat.

7. Verfahren nach einem der Ansprüche 1 bis 5, **dadurch gekennzeichnet, dass** die Tragplatte (30) eine Mehrschicht-Massivholzplatte ist.

8. Verfahren nach einem der vorangehenden Ansprüche, **dadurch gekennzeichnet, dass** die Tragplatte (30) gleichzeitig von beiden Seiten beschichtet wird.

9. Verfahren nach einem der vorangehenden Ansprüche, **dadurch gekennzeichnet, dass** die verpresste Platte in der Presse unter Aufrechterhaltung des Drucks gekühlt wird.

10. Verfahren nach einem der vorangehenden Ansprüche, **dadurch gekennzeichnet, dass** vor dem Aufftrag von WPC-Beschichtungsstoff auf die Tragplatte (30) ein Haftvermittler aufgebracht wird, wobei der Haftvermittler vorzugsweise aus einem bekannten Haftvermittler für die WPC-Herstellung und/oder aus einem bei der Tragplattenherstellung verwendeten Klebstoff besteht.

11. Verfahren nach einem der vorangehenden Ansprüche, **dadurch gekennzeichnet, dass** auf die WPC-Beschichtung zusätzlich eine duroplastische Beschichtung aus einem Melaminpapier, einem Phenolpapier oder dergleichen aufgebracht wird, oder dass eine flüssige Beschichtung auf die WPC-Beschichtung appliziert wird.

12. Verfahren nach Anspruch 11, **dadurch gekennzeichnet, dass** die duroplastische Beschichtung zusammen mit der WPC-Beschichtung in einem Pressvorgang appliziert wird.

13. Verfahren nach Anspruch 11, **dadurch gekennzeichnet, dass** die duroplastische Beschichtung nach der WPC-Beschichtung in einem zusätzlichen Pressvorgang appliziert wird.

14. Verfahren nach einem der vorangehenden Ansprüche, **dadurch gekennzeichnet, dass** sich zwischen der Tragplatte und dem WPC-Beschichtungsstoff eine thermoplastische Folie befindet, die zusammen mit dem WPC-Beschichtungsstoff verpresst wird.

15. Verfahren nach einem der Ansprüche 1 bis 4 oder 6 bis 14, **dadurch gekennzeichnet, dass** der WPC-Beschichtungsstoff aus einer in einem vorhergehenden Pressvorgang hergestellten Platte oder Folie besteht.

16. Wenigstens zweischichtige Platte, hergestellt nach einem Verfahren einer der vorangehenden Ansprüche, wobei die Platte eine Tragschicht aus OSB und wenigstens eine aus einem Holz-Polymer-Komposit Material (Wood Polymer Composites oder WPC-Material bestehende Beschichtung, welche auf wenigstens einer Seite der Tragschicht angeordnet ist, aufweist, **dadurch gekennzeichnet, dass** die Tragschicht eine Rohdichte von weniger als 495 kg/m³ hat.

## Claims

1. Method for producing an at least two-layered board (35, 36), the board comprising a carrier layer, which consists at least in part of wood or lignocellulose-containing particles or fibres, and at least one coating which consists of a wood polymer composite material (Wood Polymer Composites or WPC material) and is arranged on at least one side of the carrier layer, **characterised by** the following steps:
- providing a finished carrier board (30) which forms the carrier layer,
- providing WPC coating material on at least one of the two surfaces of the carrier board (30),
- pressing the WPC coating material and carrier board (30) under the effect of heat and pressure.

2. Method according to claim 1, **characterised in that** the WPC coating material consists substantially of a mixture of a thermoplastic polymer with lignocellulose-containing particles.

3. Method according to claims 1 and 2, **characterised in that** the lignocellulose-containing particles are chips and/or fibrous materials.

4. Method according to claims 2 and 3, **characterised in that** a mixture ratio x (x = mₘ/mₚ), based on mass, between the thermoplastic polymer mₘ and the lignocellulose-containing particles mₚ of x = 0.1 to 4, preferably 0.5 to 2, is selected.

5. Method according to claim 1, **characterised in that** the WPC coating material is a WPC granular material (32) or a WPC powder which is strewed onto the upward facing surface of the carrier board (30).

6. Method according to any of the preceding claims, **characterised in that** the carrier board (30) is a wood-based-material board, e.g. an OSB board, or a solid wood board that preferably has a bulk density of less than 500 kg/m³.

7. Method according to any of claims 1 to 5, **characterised in that** the carrier board (30) is a multi-layer solid wood board.

8. Method according to any of the preceding claims, **characterised in that** the carrier board (30) is coated on both sides simultaneously.

9. Method according to any of the preceding claims, **characterised in that** the pressed board is cooled in the press while the pressure is maintained.

10. Method according to any of the preceding claims, **characterised in that** an adhesion promoter is applied to the carrier board (30) prior to the application of WPC coating material, wherein the adhesion promoter preferably consists of a known adhesion promoter for the WPC production and/or of an adhesive used for the production of carrier boards.

11. Method according to any of the preceding claims, **characterised in that** a thermosetting coating made of a melamine paper, a phenol paper or the like is additionally applied to the WPC coating, or **in that** a liquid coating is applied to the WPC coating.

12. Method according to claim 11, **characterised in that** the thermosetting coating is applied together with the WPC coating in one pressing operation.

13. Method according to claim 11, **characterised in that** the thermosetting coating is applied after the WPC coating in an additional pressing operation.

14. Method according to any of the preceding claims, **characterised in that** a thermoplastic film is located between the carrier board and the WPC coating material and is pressed simultaneously with the WPC coating material.

15. Method according to any of claims 1 to 4 or 6 to 14, **characterised in that** the WPC coating material consists of a board or film produced in a preceding pressing operation.

16. Board having at least two layers being manufactured according to one of the preceding claims, the board comprising a carrier layer made of OSB and at least one coating which consists of a wood polymer composite material (Wood Polymer Composites or WPC material) and is arranged on at least one side of the carrier layer, **characterised in that** the carrier layer has a bulk density of less than 495 kg/m³.

## Revendications

1. Procédé de fabrication d'une plaque d'au moins deux couches (35, 36), la plaque ayant une couche de support étant au moins partiellement en bois ou en particules ou fibres contenant de la lignocellulose, et au moins un revêtement en un matériau composite bois-polymère (Wood Polymer Composites ou matériau WPC) disposé sur au moins un côté de la couche de support,
**caractérisé par** les étapes suivantes:
- fourniture d'une plaque de support finie (30) formant la couche de support,
- fourniture de matériau de revêtement WPC sur au moins l'une des deux surfaces de la plaque de support (30),
- pressage du matériau de revêtement WPC et de la plaque de support (30) sous l'action de la chaleur et sous pression.

2. Procédé selon la revendication 1, **caractérisé en ce que** le matériau de revêtement WPC consiste substantiellement en un mélange d'un polymère thermoplastique avec des particules lignocellulosiques.

3. Procédé selon la revendication 1 et 2, **caractérisé en ce que** les particules lignocellulosiques sont des copeaux et/ou des matières fibreuses.

4. Procédé selon la revendication 2 et 3, **caractérisé en ce qu'**un rapport de mélange en poids x (x = m_{m/}mₚ) entre le polymère thermoplastique mₘ et les particules lignocellulosiques mₚ est choisi de x = 0,1 à 4, de préférence 0,5 à 2.

5. Procédé selon la revendication 1, **caractérisé en ce que** le matériau de revêtement WPC est un granulé ou une poudre WPC (32) saupoudré(e) sur la surface orientée vers le haut de la plaque de support (30).

6. Procédé selon l'une quelconque des revendications précédentes, **caractérisé en ce que** la plaque de support (30) est un panneau en matériau à base de bois, p. ex. panneau OSB, ou un panneau en bois massif, ayant de préférence une masse volumique apparente inférieure à 500 kg/m³.

7. Procédé selon l'une des revendications 1 à 5, **caractérisé en ce que** la plaque de support (30) est un panneau en bois massif multicouche.

8. Procédé selon l'une quelconque des revendications précédentes, **caractérisé en ce que** la plaque de support (30) est revêtue des deux côtés en même temps.

9. Procédé selon l'une quelconque des revendications précédentes, **caractérisé en ce que** la plaque pressée est refroidie dans la presse tout en maintenant la pression.

10. Procédé selon l'une quelconque des revendications précédentes, **caractérisé en ce qu'**un agent d'adhérence est appliqué sur la plaque de support (30) avant l'application de matériau de revêtement WPC, l'agent d'adhérence étant de préférence constitué d'un agent d'adhésion connu pour la fabrication de WPC et/ou d'un adhésif utilisé dans la fabrication de plaques de support.

11. Procédé selon l'une quelconque des revendications précédentes, **caractérisé en ce qu'**un revêtement thermodurcissable en papier mélaminé, papier phénolique ou similaire est en outre appliqué sur le revêtement WPC, ou **en ce qu'**un revêtement liquide est appliqué sur le revêtement WPC.

12. Procédé selon la revendication 11, **caractérisé en ce que** le revêtement thermodurcissable est appliqué avec le revêtement WPC dans un processus de pressage.

13. Procédé selon la revendication 11, **caractérisé en ce que** le revêtement thermodurcissable est appliqué après le revêtement WPC dans un processus de pressage supplémentaire.

14. Procédé selon l'une quelconque des revendications précédentes, **caractérisé en ce qu'**un film thermoplastique se trouve entre la plaque de support et le matériau de revêtement WPC, le film étant pressé avec le matériau de revêtement WPC.

15. Procédé selon l'une des revendications 1 à 4 ou 6 à 14, **caractérisé en ce que** le matériau de revêtement WPC est constitué d'un panneau ou d'un film fabriqué lors d'un processus de pressage préalable.

16. Plaque d'au moins à deux couches, fabriquée selon un procédé selon l'une quelconque des revendications précédentes, la plaque ayant une couche de support en OSB et au moins un revêtement constitué d'un matériau composite bois-polymère (Wood Polymer Composites ou matériau WPC) disposé sur au moins un côté de la couche de support, **caractérisé en ce que** la couche de support a une masse volumique apparente inférieure à 495 kg/m³.
